(19) Europäisches Patentamt
European Patent Office
Office européen des brevets

(11) **EP 3 575 741 B1**

(12) **EUROPÄISCHE PATENTSCHRIFT**

(45) Veröffentlichungstag und Bekanntmachung des Hinweises auf die Patenterteilung:
**28.08.2024 Patentblatt 2024/35**

(21) Anmeldenummer: **19176955.3**

(22) Anmeldetag: **28.05.2019**

(51) Internationale Patentklassifikation (IPC):
**G01B 11/24** *(2006.01)* **G01B 11/25** *(2006.01)*
**B26B 21/40** *(2006.01)* **B26B 21/54** *(2006.01)*

(52) Gemeinsame Patentklassifikation (CPC):
**G01B 11/24;** B26B 21/4068; B26B 21/54;
G01B 2210/54

(54) **VERFAHREN ZUM BERÜHRUNGSFREIEN VERMESSEN EINER WERKSTÜCKKANTE**

METHOD FOR CONTACT-FREE MEASUREMENT OF A WORKPIECE EDGE

PROCÉDÉ DE MESURE SANS CONTACT D'UN BORD DE PIÈCE À USINER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2018 EP 18174744**

(43) Veröffentlichungstag der Anmeldung:
**04.12.2019 Patentblatt 2019/49**

(73) Patentinhaber:
• **manroland Goss web systems GmbH 86153 Augsburg (DE)**
• **grapho metronic Mess- und Regeltechnik GmbH 81669 München (DE)**

(72) Erfinder: **Kratochwill, Jürgen 81825 München (DE)**

(56) Entgegenhaltungen:
EP-A1- 3 309 508    US-A- 3 909 131
US-A- 4 226 536    US-A- 4 939 379
US-A- 5 793 493

**Beschreibung**

Die Erfindung betrifft ein Verfahren zur berührungsfreien Vermessung der Kontur einer Werkstückkante eines Werkstückes, wobei sich die Werkstückkante an eine Werkstückfläche mit Erstreckung in einer ersten Hauptrichtung X anschließt, und wobei die Werkstückkante in Erstreckung der ersten Hauptrichtung X eine Kantenhöhe h aufweist, und wobei die Werkstückkante von mindestens einer Lichtquelle angestrahlt wird, so dass ein in einer Erstreckung in der ersten Hauptrichtung X auf die Werkstückkante unter einem Einfallwinkel $\alpha$ in Bezug auf die erste Hauptrichtung X einfallender Lichtstrahl in einen zugehörigen reflektierten Lichtstrahl reflektiert wird, und wobei jeder reflektierte Lichtstrahl in Abhängigkeit der Kontur der Werkstückkante in Erstreckung der ersten Hauptrichtung X einen konturabhängigen Austrittswinkel $\beta$ aufweist, wobei die reflektierten Lichtstrahlen (5) von mindestens einem optischen Sensor (6) mit einer Erfassungsrichtung Y erfasst werden, wobei der mindestens eine optische Sensor (6) eine Abbildungshöhe H aufweist, wobei die Abbildungshöhe H die Abmessung des lichtempfindlichen Sensors (6) in Erstreckung im Wesentlichen parallel zur ersten Hauptrichtung X ist, und wobei die Kontur der Werkstückkante (2) anhand der von dem optischen Sensor (6) erfassten Strahlungsintensität der reflektierten Lichtstrahlen (5) in Abhängigkeit des konturabhängigen Austrittswinkels $\beta$ in Bezug auf den Einfallwinkel $\alpha$ errechnet wird, wobei die Werkstückkante (2) als auch der optische Sensor (6) während der Vermessung eine räumlich unveränderliche Position innehaben und wobei die Werkstückkante (2) mittels mindestens einer Lichtquelle (3) in unterschiedlichen Einfallwinkeln $\alpha$ angestrahlt wird.

Werkstückkanten, welche entgegen der allgemeinen Definition nicht einfach eine mehr oder weniger scharfkantige Abgrenzung zweier Werkstückflächen darstellen, sondern welche durch eine vorgegebene Kontur wie beispielsweise eine Krümmung, einen Radius, ein Polygon aus in unterschiedlichen Winkeln zueinanderstehenden Flächen definiert sind, werden auf unterschiedliche Weise vermessen. So finden teilweise Verfahren Anwendung, bei denen die Kontur an ausgewählten Werkstücken mechanisch abgetastet wird, so dass über die Koordinatenpunkte die Kontur abgeleitet werden kann.

Ferner kommen auch berührungsfreie Messverfahren zum Einsatz, bei welchen das zumeist einzelne Werkstück beispielsweise über optische Verfahren abgetastet und die Kontur berechnet wird.

Insbesondere bei der Vermessung von Werkstückkanten zur Bestimmung der tatsächlich ausgeprägten Kontur der betreffenden Werkstückkanten von endlosen Materialien, wie beispielsweise einem Stahlband zur Herstellung von Klingen für Nassrasierer, ist es jedoch zum Vermessen der Werkstückkante, welche eine Seite einer Klinge darstellt, in der Praxis zur Bestimmung der exakten geometrischen Kontur der Werkstückkante erforderlich, ein Probestück aus dem bereits geschliffenen Bandmaterial herauszutrennen, die Werkstückkante dieses Probestückes zu vermessen und abhängig vom Messergebnis der Werkstückkante zu bewerten, ob beziehungsweise wie die Bearbeitungsvorrichtungen nachgestellt werden müssen, um die vorgegebene Kontur der mindestens einen Werkstückkante zu erreichen. Im Falle einer unzulässigen Abweichung der Kontur der mindestens einen Werkstückkante muss das bislang geschliffene Bandmaterial gegebenenfalls als unbrauchbar entsorgt werden.

Aus der DE 15 77 341 ist ein Verfahren bekannt, bei welchem eine geschliffene Kante getaktet beleuchtet wird, wobei mittels des reflektierten Lichtes ermittelt wird, ob die angeschliffenen Facetten einem vorgegeben Referenzwert entsprechen oder ob eine Nachstellung der Schleifvorrichtung erforderlich ist. Dieses dort offenbarte Verfahren ermöglicht jedoch nicht die Ermittlung der exakten Kontur der Werkstückkante.

Die DE 27 00 713 offenbart ein Verfahren, bei welcher eine Schleifkante mittels Laserlicht beleuchtet wird, wobei anhand der Erfassung von reflektiertem Licht anhand von fest positionierten fotooptischen Sensoren festgestellt werden kann, ob die angeschliffene Kontur in ihrem Reflexionsverhalten einer vorgegebenen Kante entspricht. Auch mit diesem Verfahren lässt sich anhand des reflektierten Lichtes nicht die tatsächliche Kontur ermitteln, es sind lediglich Referenzmessungen zu einem Referenzwerkstück möglich.

EP 3 309 508 A1 betrifft ein Verfahren zur Vermessung von Oberflächen. Eine Lichtquelle bestrahlt die Oberfläche eines Objekts. Mit einer Kamera wird ein Schirm erfasst, auf den an der Oberfläche reflektierte Lichtstrahlen treffen. Es wird ein Neigungswinkel der Oberfläche berechnet, und zwar abhängig von einer Verschiebung eines reflektierten Bilds von einer Referenzposition sowie abhängig von einem horizontalen Abstand.

US 4 939 379 A und US 4 226 536 A offenbaren ebenfalls die Vermessung von Oberflächen unter Verwendung von Lichtquellen, welche die Oberfläche anstrahlen.

Aus US 3 909 131 A und US 5 793 493 A ist weiterer Stand der Technik bekannt.

Der Erfindung liegt daher die Aufgabe zugrunde, eine Lösung zu schaffen, mit welcher eine beliebige Kontur einer Werkstückkante anhand des reflektierten Lichts und somit berührungsfrei ermittelt werden kann, ohne Referenzmessungen zu benötigen.

Diese Aufgabe wird durch ein Verfahren gemäß Anspruch 1 gelöst. Das erfindungsgemäße Verfahren beruht darauf, dass eine Mehrzahl von sequentiell leuchtenden Lichtquellen (3) in etwa kreisbogenförmig um die Werkstückkante (2) angeordnet ist, wobei die durch das Kreisbogensegment aufgespannte Ebene im Wesentlichen senkrecht zur Erstreckung der Werkstückkante (2) angeordnet ist, und wobei die Lichtquellen (3) zueinander derart versetzt sind, dass die Werkstückkante (2) bei Beleuchtung benachbarter Lichtquellen (3) unter einem definierten Winkelversatz φ angestrahlt wird.

Ein derartiges Verfahren weist den Vorteil auf, dass damit berührungsfrei die exakte Kontur mindestens einer Werkstückkante ermittelt werden kann, ohne dass hierzu mechanisch oder optisch basierte Referenzmessungen erforderlich sind. Ferner kann bei endlosen Werkstücken die tatsächliche Kontur während des Produktionsvorganges mehr oder weniger lückenfrei errechnet werden, so dass eine Unterbrechung von Produktionsprozessen nicht mehr erforderlich ist.

Gemäß der Erfindung erfolgt die Beleuchtung der Werkstückkante in unterschiedlichen Winkeln auch in der Form, dass eine Mehrzahl von sequentiell leuchtenden Lichtquellen in etwa kreisbogenförmig um die Werkstückkante angeordnet ist, wobei die durch das Kreisbogensegment aufgespannte Ebene im Wesentlichen senkrecht zur Erstreckung der Werkstückkante angeordnet ist, und wobei die Lichtquellen zueinander derart versetzt sind, dass die Werkstückkante bei Beleuchtung benachbarter Lichtquellen unter einem definierten Winkelversatz φ angestrahlt wird.

Eine derartige Ausgestaltung der Beleuchtung hat den Vorteil, dass zum einen keine beweglichen Teile zum Einsatz kommen, sondern dass die mehreren Lichtquellen eine feste Position innehaben, was die Betriebszuverlässigkeit insbesondere bei Betrieb unter belasteter Umgebung, wie beispielsweise durch Staub belastete Umgebung, erhöht. Ferner können durch die feste und definierte Anordnung der Lichtquellen Messfehler des einfallenden Winkels ausgeschlossen werden, was die Zuverlässigkeit der Messung und Berechnung ebenfalls erhöht.

Das erfindungsgemäße Verfahren wird in der Form ausgeführt, dass die zu vermessende Werkstückkante als auch die Mehrzahl der Lichtquellen während der Vermessung eine räumlich unveränderliche Position innehaben und dass hierbei die reflektierten Lichtstrahlen in unterschiedlichen Winkeln zur Werkstückkante durch mindestens einen optischen Sensor erfasst werden.

Auch hierbei ist es wiederum möglich, dass hierzu eine Mehrzahl von sequentiell die reflektierten Lichtstrahlen erfassenden optischen Sensoren in etwa kreisbogenförmig um die Werkstückkante angeordnet ist, wobei die durch das Kreisbogensegment aufgespannte Ebene im Wesentlichen senkrecht zur Erstreckung der Werkstückkante angeordnet ist, und wobei die optischen Sensoren zueinander derart versetzt sind, dass die von der Werkstückkante reflektierten Lichtstrahlen unter einem definierten Winkelversatz φ der optischen Sensoren zueinander erfasst werden.

Eine derartige Ausgestaltung hat den Vorteil, dass das erfindungsgemäße Verfahren mit räumlich fest positionierten Lichtquellen ausgeführt werden kann.

In einer weiteren Ausgestaltung der Erfindung ist es auch möglich, dass die reflektierten Lichtstrahlen mit mindestens zwei redundanten optischen Sensoren zeitgleich zur Erzielung einer besseren Auflösung und/oder des Ausblendens des Rauschens erfasst werden.

Das erfindungsgemäße Verfahren als auch die entsprechenden Ausgestaltungen können auch in der Form verwendet werden, dass ein Werkstück mit zwei gegenüberliegenden Werkstückkanten wie beispielsweise eine Klinge in der Form vermessen wird, dass das erfindungsgemäße Verfahren spiegelbildlich zeitgleich oder zeitlich versetzt auf einer Mehrzahl der relevanten Seiten des Werkstückes durchgeführt wird.

Bevorzugte Weiterbildungen der Erfindung ergeben sich aus den abhängigen Ansprüchen und der nachfolgenden Beschreibung. Verschiedene Ausführungsbeispiele werden, ohne hierauf beschränkt zu sein, an Hand der Zeichnungen näher erläutert. Dabei zeigt:

Fig. 1: Beispiele von zu vermessenden Werkstückkanten

Fig. 2: Funktionsskizze des Verfahrens für zwei beispielhafte Beleuchtungswinkel

Fig. 3: Darstellung der Winkelverhältnisse für einen beispielhaften Beleuchtungswinkel

Fig. 4: Eine beispielhafte Anordnung zur Ausführung des erfindungsgemäßen Verfahrens mit sowohl feststehendem Werkstück, feststehendem optischem Sensor und beweglicher Lichtquelle

Fig. 5: Eine erfindungsgemäße Anordnung zur Ausführung des erfindungsgemäßen Verfahrens mit sowohl feststehendem Werkstück, feststehendem optischem Sensor und einer Mehrzahl in etwa kreisbogenförmig um die zu vermessende Werkstückkante angeordneter Lichtquellen

Fig. 6: Eine beispielhafte Anordnung zur Ausführung eines Verfahrens mit sowohl feststehendem Werkstück, feststehender Lichtquelle und beweglichem optischen Sensor

Fig. 7: Eine beispielhafte Anordnung zur Ausführung eines Verfahrens mit sowohl feststehendem Werkstück, feststehender Lichtquelle und einer Mehrzahl in etwa kreisbogenförmig um die zu vermessende Werkstückkante angeordneter optischer Sensoren

Fig. 8: Eine beispielhafte Anordnung zur Ausführung eines Verfahrens mit sowohl beweglichem Werkstück, feststehendem optischem Sensor und feststehender Lichtquelle

Fig. 9: Eine beispielhafte Anordnung zur Ausführung eines Verfahrens mit sowohl beweglichem Werkstück, zum Werkstück örtlich fest positioniertem optischem Sensor und feststehender Lichtquelle

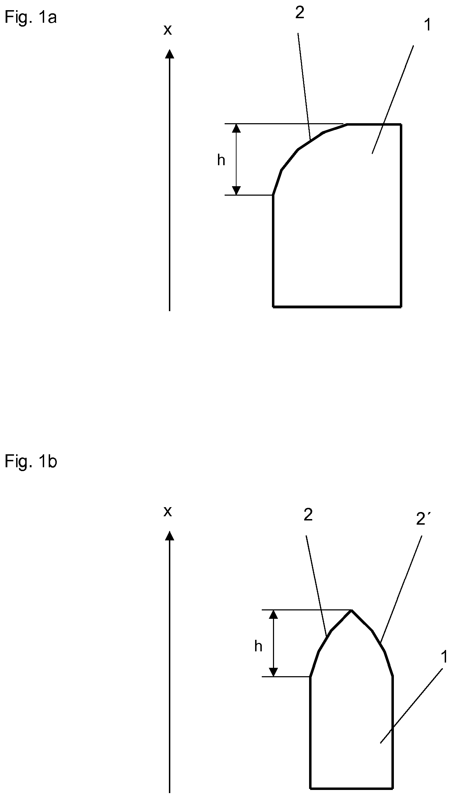

Die Figuren 1a und 1b zeigen beispielhafte Werkstückkanten 2, von welchen die Kontur erfasst werden soll. Wenngleich in der vorliegenden Beschreibung und den Patentansprüchen des besseren Verständnisses wegen die zu vermessende Kontur im Randbereich eines Werkstückes 1 als Werkstückkante 2 bezeichnet wird, so ist bei der vorliegenden Erfindung der Begriff einer Werkstückkante 2 nicht gemäß der üblichen Definition einer Kante als durch zwei aneinanderstoßende Ebenen oder Flächen gebildete Linie zu verstehen, vielmehr ist bei der vorliegenden Erfindung der Begriff der Werkstückkante 2 als Endbereich einer Werkstückfläche im Sinne eines Randes oder einer äußeren Begrenzung einer Fläche zu sehen.

Aufgabe der vorliegenden Erfindung ist es, die Kontur dieses als Werkstückkante 2 bezeichneten Endbereiches einer Werkstückfläche mit einem optischen Verfahren zu vermessen beziehungsweise zu berechnen.

Fig. 1a zeigt ein Beispiel einer verrundeten oder mittels zueinander abgesetzter Facetten nicht mehr scharfkantig ausgestaltete Werkstückkante 2 eines Werkstückes 1. Eine derartige Werkstückkante 2 kann entweder aus funktionalen Gründen eine entsprechend definierte Kontur aufweisen oder aber beispielsweise zur Vermeidung von Verletzungen, der Haptik wegen oder aus gestalterischen Gründen heraus entsprechend ausgestaltet sein.

Fig. 1b zeigt ein beispielhaftes Werkstück 1, welches zwei gegenüberliegende, mit einer vorgegebenen Kontur ausgestalteten Werkstückkanten 2, 2', wobei diese beiden Werkstückkanten 2,2' beispielsweise in der Form ausgestaltet sein können, dass aus diesen eine Schneide gebildet wird, wie diese beispielsweise bei Rasierklingen zum Einsatz kommt.

Das Werkstück 1 kann entweder als einzelnes Werkstück 1 mit mehr oder weniger begrenzten Abmessungen ausgestaltet sein, oder es kann als mehr oder weniger in Erstreckung senkrecht zu den in den Abbildungen 1a und 1b dargestellten Querschnitten in mehr oder weniger unendlicher Dimension, nämlich als bandförmiges Material ausgebildet sein. Derartige bandförmige Materialien kommen beispielsweise bei Klingen von Nassrasierern zum Einsatz, wobei die Schneide mittels zwei entsprechend gestalteten, gegenüberliegenden Werkstückkanten 2 ausgestaltet und in einem mehr oder weniger endlosen Verfahren an das bandförmige Material angeschliffen wird, und das bandförmige Material nach dem Schleifen der Schneide in einzelne Klingen geschnitten wird.

Die in den Figuren 1a und 1b dargestellten Werkstücke 1 weisen eine ebene Fläche auf, die sich in einer ersten Hauptrichtung X erstreckt. An diese in der ersten Hauptrichtung X erstreckende Fläche des Werkstückes 1 grenzt die zu vermessende Werkstückkante 2 an, die eine beliebige Kontur aufweist und gemäß der oben angeführten Definition keine Kante im Sinne einer scharfkantigen Schnittlinie zweier Ebenen ist, sondern in Erstreckung der ersten Hauptrichtung X eine Kantenhöhe h aufweist. Die so in dieser vorliegenden Erfindung als Werkstückkante 2 benannte Kontur im Randbereich einer Fläche kann entweder wie in Fig. 1a dargestellt an eine zweite Ebene, welche in einem beliebigen Winkel zur ersten Hauptrichtung X stehen kann, münden oder kann, wie in Fig. 1b dargestellt, an eine weitere Werkstückkante 2' angrenzen. Die in Fig. 1b dargestellten Werkstückkanten 2, 2', können beispielsweise eine Schnittkante bilden.

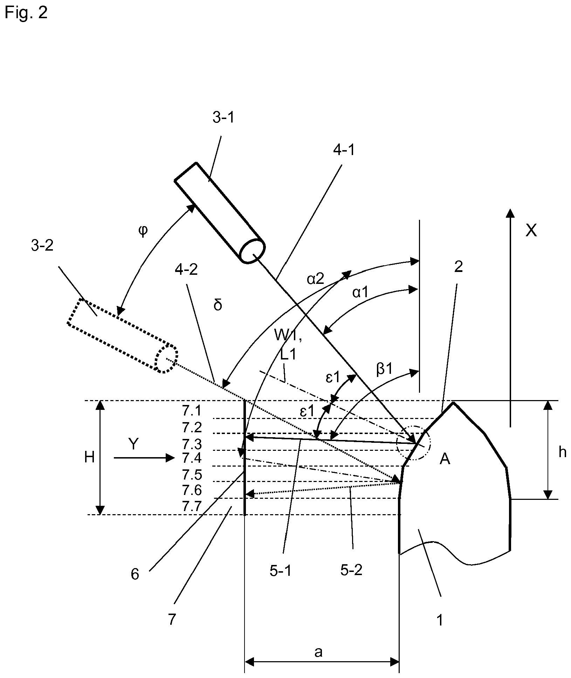

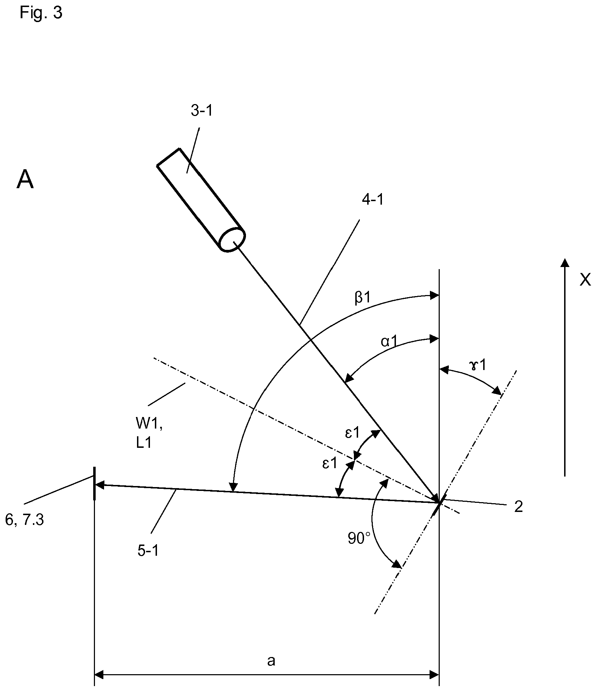

Fig. 2 zeigt einen beispielhaften Aufbau zur Durchführung eines Verfahrens. Hierbei ist der grundsätzliche Strahlenverlauf für eine spezifische Ausgestaltung der Erfindung dargestellt, Fig. 3 zeigt in Ergänzung der Fig. 2 noch weitere Details zur Berechnung der Winkeloberfläche.

An dieser Stelle wird angemerkt, dass die Lichtstrahlen 4, 5 zwar nur als Linien dargestellt sind, aber die Lichtstrahlen 4, 5 in der Realität eine entsprechende Ausdehnung senkrecht zu den dargestellten Linien aufweisen, so dass mittels einer Lichtquelle 3 nicht nur ein Punkt der Werkstückkante 2 mit theoretisch unendlich kleiner Ausdehnung angestrahlt wird, sondern dass vielmehr mit einem einfallenden Lichtstrahl 4 mindestens ein Teilbereich der Werkstückkante 2 oder die gesamte Werkstückkante 2 beleuchtet wird. In den Darstellungen insbesondere der Figuren 2 und 3 ist jedoch aus Gründen der Verständlichkeit nur der Teil der Lichtstrahlen 4, 5 abgebildet, der jeweils ein entsprechendes Intensitätsmaximum verursacht.

In Fig. 2 wird die Werkstückkante 2 in einer beispielhaften Ausgestaltung der Anordnung von Werkstück 1, Lichtquelle 3 und optischem Sensor 6 beispielhaft in zwei unterschiedlichen Winkeln beleuchtet. Die in einer ersten Position befindliche erste Lichtquelle 3-1 bestrahlt die zu vermessende Werkstückkante 2 mit einem ersten einfallenden Lichtstrahl 4-1, der unter einem ersten Eintrittswinkel $\alpha 1$ zur ersten Hauptrichtung X auf die beispielhaft dargestellte facettenförmig gestaltete Werkstückkante 2 trifft.

Der so einfallende Lichtstrahl 4-1, welcher in Fig. 2 als durchgängige Linie dargestellt ist, wird gemäß dem Reflexionsgesetz von der Werkstückkante 2 in den reflektierten Lichtstrahl 5-1, welcher ebenfalls als durchgängige Linie dargestellt ist, reflektiert und trifft als reflektierter Lichtstrahl 5-1 auf einen fotooptisch sensitiven Sensor 6 mit der Abbildungshöhe H des optischen Sensors 6. Der optische Sensor 6 kann beispielsweise als CCD-Sensor oder als CMOS-Sensor mit definierter optischer Auflösung ausgestaltet sein. Derartige CCD- oder CMOS-Sensoren sind lichtempfindliche elektronische Bauteile mit einer flächigen Ausdehnung.

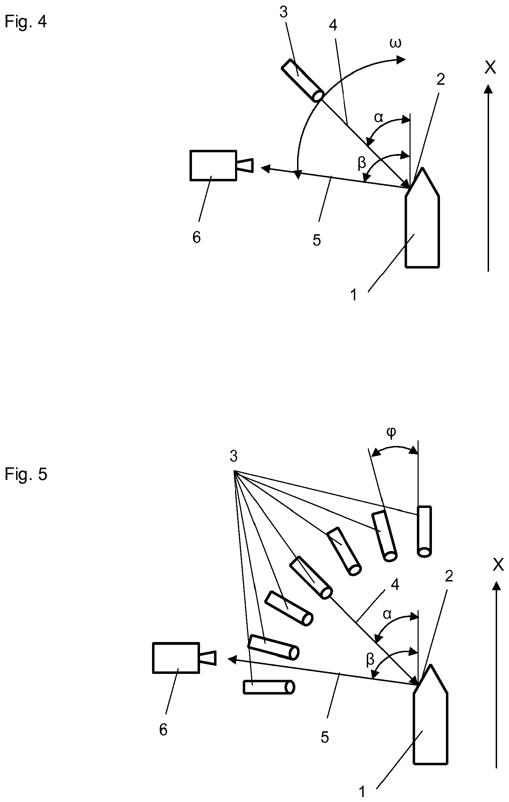

Der optische Sensor 6 ist in Fig. 2 zum besseren Verständnis des Berechnungsverfahrens zur Herleitung der Kontur der zu vermessenden Werkstückkante 2 lediglich als Projektion des als im Wesentlichen flächiges Bauteil ausgebildeten optischen Sensors 6 auf die Betrachtungsebene dargestellt. In Fig. 2 ist der optische Sensor somit auf die Wirkfläche beispielsweise eines CCD- oder CMOS-Sensors reduziert, wohingegen in den schematischen Figuren 4 bis 9 der optische Sensor 6 als Piktogramm einer Kamera dargestellt ist.

Derartige optische Sensoren 6 erfassen das einfallende Licht pixel- oder zeilenweise, da diese Sensoren 6 in sogenannte kleinste Erfassungseinheiten 7 unterteilt sind. In der in Fig. 2 beispielhaft dargestellten Ausführung wird nur die zeilenweise Erfassung in Erstreckung der Abbildungshöhe H berücksichtigt. Wie in Fig. 2 rein beispielhaft dargestellt, ist die Abbildungshöhe H des optischen Sensors 6 in sieben kleinste Erfassungseinheiten 7.1, 7.2, 7.3, 7.4, 7.5, 7.6, 7.7 aufgeteilt, wobei die Abbildungshöhe H nicht zwingend aber zumeist größer als die Kantenhöhe h der zu vermessenden Werkstückkante 2 ausgestaltet ist. Die Abbildungshöhe H des optischen Sensors 6, das heißt die Abmessung des lichtempfindlichen Sensors in Erstreckung im Wesentlichen parallel zur ersten Hauptrichtung X ist somit gleich groß oder größer als die Kantenhöhe h. In einer besonders bevorzugten Ausgestaltung beträgt die Abbildungshöhe H mindestens das 1,5-fache der Kantenhöhe h, da bei einer im Vergleich zur Kantenhöhe h der zu vermessenden Werkstückkante 2 der Aufwand beim Einrichten zur Vermessung eines neuen Werkstückes reduziert wird. Die Erfassungsrichtung Y des optischen Sensors 6 ist zumeist wenngleich nicht zwingend senkrecht zu der Fläche des optischen Sensors und somit senkrecht zur Abbildungshöhe H ausgerichtet.

Zwar schließt bei der in Fig. 2 dargestellten Ausgestaltung aus Gründen der Übersichtlichkeit die Abbildungshöhe H des optischen Sensors 6 mit dem oberen Ende der Werkstückkante 2 ab. Es ist jedoch wie oben angeführt auch möglich oder vorteilhaft, dass die Abbildungshöhe H auf beiden Seiten in Erstreckung der ersten Hauptrichtung X die Kantenhöhe h überragt, um gegebenenfalls auftretende Toleranzen ausgleichen zu können, zumal die Höhe der kleinsten Erfassungseinheiten 7 in der Praxis insbesondere bei hohen Auflösungen der eingesetzten CCD- oder CMOS-Sensoren sehr gering ist.

Der optische Sensor 6 kann, wenngleich zeichnerisch nicht in Fig. 2 dargestellt, abhängig von der Auslegung, abhängig von der Kantenhöhe h der zu vermessenden Werkstückkante 2 oder beispielsweise abhängig von der erforderlichen Auflösung und somit der Genauigkeit der bestimmten Kantengeometrie der zu vermessenden Werkstückkante 2 mit oder ohne vorgeschalteter Optik ausgestaltet sein. Eine derartige vorgeschaltete Optik ist üblicherweise als Objektiv mit einem Objektivdurchmesser d ausgeführt, in besonders vorzugsweiser Ausgestaltung ist diese als telezentrisches Objektiv mit einem Objektivdurchmesser d ausgeführt.

Wird der optische Sensor 6 mit einem vorgeschalteten Objektiv ausgestattet, so ist der Objektivdurchmesser d für die größenmäßige Auslegung mit der Abbildungshöhe H gleichzusetzen. Dies bedeutet, dass in diesem Fall ist der Objektivdurchmesser d mindestens gleich groß oder größer als die Kantenhöhe h der zu vermessenden Werkstückkante 2 ist. In einer besonders bevorzugten Ausgestaltung beträgt der Objektivdurchmesser d mindestens das 1,5-fache der Kantenhöhe h, da bei einer im Vergleich zur Kantenhöhe h der zu vermessenden Werkstückkante 2 der Aufwand beim Einrichten zur Vermessung eines neuen Werkstückes reduziert wird.

Abhängig von dem optischen Vergrößerungs-Faktor n des vorgeschalteten Objektives gilt für die Abbildungshöhe H des optischen Sensors 6:

$$H \geq n \times h$$

oder vorzugsweise, um die Abbildungshöhe H auf den Objektivdurchmesser d auszulegen:

$$H \geq n \times d$$

Am Beispiel einer 2-fachen Vergrößerung des Objektives (n=2) ist somit die Abbildungshöhe H des optischen Sensors 6 mindestens doppelt so groß wie die zu vermessende Kantenhöhe h oder vorzugsweise mindestens doppelt so groß wie der Objektivdurchmesser d, wohingegen bei einer 0,5-fachen Vergrößerung ("2-fache Verkleinerung", n=0,5) d die Abbildungshöhe H des optischen Sensors 6 mindestens halb so groß wie die zu vermessende Kantenhöhe h oder vorzugsweise mindestens halb so groß wie der Objektivdurchmesser d ist.

Der optische Sensor 6 - oder im Falle des Vorhandenseins eines vorgeschalteten Objektives die der Werkstückkante 2 zugewandte Objektivvorderkante - ist ferner mit dem Sensorabstand a von dem Werkstück 1 beabstandet. Vorzugsweise wird der Sensorabstand a so gering wie möglich gehalten, um die Lageabweichung der Intensitätsmaxima in Erstreckung der ersten Hauptrichtung X im Falle eines nicht rechtwinkligen Austrittswinkels β so gering wie möglich zu halten.

Da in Fig. 2 dem besseren Verständnis wegen eine Ausführung ohne Verwendung eines dem optischen Sensors 6 vorgeschaltetem Objektiv dargestellt ist, wird nachfolgend nur die Variante mit einem optischen Sensor 6 beschrieben. Bei Verwendung eines dem optischen Sensor 6 vorgeschaltetem Objektiv beziehen sich die Angaben wie beispielsweise zum Sensorabstand a, zur Ausrichtung auf die Werkstückkante 2 etc. anstelle auf den optischen Sensor 6 auf das Objektiv, ohne diese Variante gesondert zu erwähnen.

Zur Kalibrierung dieses in Fig. 2 beispielhaft dargestellten Messaufbaus ist vor und/oder zwischen der Berechnung der Kontur der Werkstückkante 2 eine Kalibrierung durchzuführen. Hierbei ist zum einen der Winkel δ, welcher sich zwischen der Erfassungsrichtung Y des optischen Sensors 6 und der mindestens einen Lichtquelle 3 erstreckt, zu bestimmen. Die Erfassungsrichtung Y des optischen Sensors 6 ist zumeist senkrecht zur Abbildungshöhe H ausgerichtet.

Kann die Lichtquelle 3 mehrere Positionen mit unterschiedlichen aber definierten Eintrittswinkeln α einnehmen, so ist hierbei die Erfassung des Winkels δ für eine exakt definierte Position oder für eine exakt definierte Referenzposition der Lichtquelle 3 ausreichend.

Besteht die Lichtquelle 3 aus einer Mehrzahl von Lichtquellen 3, welche zueinander in einem definierten Winkelversatz φ zueinander angeordnet sind, so ist in aller Regel ebenfalls zumeist die Erfassung des Winkels δ für eine exakt definierte Referenzposition nur einer Lichtquelle 3 ausreichend. Bei der in Fig. 2 beispielhaft dargestellten Messanordnung wird als Winkel δ der Winkel zwischen der Erfassungsrichtung Y, welche entlang den Begrenzungslinien der kleinsten Erfassungseinheiten 7 verläuft und der ersten Position der Lichtquelle 3-1 herangezogen.

Darüber hinaus ist zur oder auch vor der Kalibrierung auch der Sensorabstand a des optischen Sensors 6 vom Werkstück 1 zu erfassen.

Des Weiteren muss zur Kalibrierung der mindestens eine optische Sensor 6 in der Form kalibriert werden, dass die Kantenhöhe h auf der Abbildungshöhe H des optischen Sensors 6 definiert wird. Dies kann entweder in einer Umrechnung in Pixel oder Zeilen erfolgen, welche die Kantenhöhe h abbilden, oder aber der Sensor 6 kann in gängigen Längeneinheiten kalibriert werden. Ferner ist es erforderlich, die Lage des oberen und/oder unteren Endes der Werkstückkante 2 am optischen Sensor 6 zu definieren.

Falls der optische Sensor 6 in gängigen Längeneinheiten kalibriert werden soll, so wird vorzugsweise als optischer Sensor 6 ein in mindestens in Erstreckung der ersten Hauptrichtung X ein in einer Längeneinheit skalierter oder skalierbarer optischer Sensor 6 mit einer definierten Auflösung mit einer Abbildungshöhe H von mindestens der Kantenhöhe h der zu vermessenden Werkstückkante 2 verwendet.

Bei dem in Fig. 2 dargestellten Beispiel wird bei der Kalibrierung in der nicht dargestellten Speicher- und/oder Rechenmeinrichtung hinterlegt, dass die kleinsten Erfassungseinheiten 7.1 bis 7.6 der Kantenhöhe h entsprechen.

Sollte die Erfassungsrichtung Y des optischen Sensors 6 nicht senkrecht zu der ersten Hauptrichtung X ausgerichtet sein, oder ändert sich während eines Messvorganges der Winkel zwischen dem optischen Sensor 6 und somit dessen Erfassungsrichtung Y und der ersten Hauptrichtung X, so ist ferner der Winkel zwischen der Erfassungsrichtung Y und der ersten Hauptrichtung X bei der Kalibrierung zu hinterlegen. Es ist jedoch der Einfachheit geschuldet von Vorteil, wenn die Erfassungsrichtung Y des optischen Sensors 6 senkrecht zur ersten Hauptrichtung X ausgerichtet ist.

Ferner ist für die Kalibrierung der mindestens eine optische Sensor 6, die mindestens eine Lichtquelle 3 und das Werkstück 1 mit der zu vermessenden Werkstückkante 2 unter Beibehaltung des im ersten Schritt erfassten Winkels δ zur Kalibrierung der ersten Hauptrichtung X zueinander in der Form ausgerichtet, dass durch die von der in Erstreckung der ersten Hauptrichtung X ausgerichtete Werkstückfläche reflektierten Lichtstrahlen 5 ein flächiges Intensitätsmaximum auf dem optischen Sensor 6 gebildet wird.

Ein flächiges Intensitätsmaximum bedeutet, dass eine hohe Strahlungsintensität der reflektierten Lichtstrahlen 5 nicht nur auf einer kleinsten Erfassungseinheit 7 oder auf einer relativ geringen Zahl von kleinsten Erfassungseinheiten 7 des optischen Sensors 6 in Form eines linienförmigen Intensitätsmaximums vorliegt, sondern dass ein großer Bereich der relevanten kleinsten Erfassungseinheiten 7 des optischen Sensors 6 ein Intensitätsmaximum der reflektierten Strahlen 5 erfassen.

Durch die Zuordnung der unter dieser Konstellation ermittelten Größen wie der Winkel δ, der Einfallwinkel α und der Lage des flächigen Intensitätsmaximums auf dem optischen Sensor 6 kann somit für die Berechnung der Kontur der Werkstückkante 2 erforderliche Abbildung der ersten Hauptrichtung X für das Rechenmodell festgelegt werden, da ein flächiges Intensitätsmaximum nur dann entstehen kann, wenn die an die zu vermessende Werkstückkante 2 angrenzende Werkstückfläche, welche in Erstreckung der ersten Hauptrichtung X ausgerichtet ist, die einfallenden Lichtstrahlen 4 flächig reflektiert.

Im Bedarfsfalle ist ferner eine Kalibrierung auf die Strahlungsintensität der verwendeten Lichtquelle 3 oder der Mehrzahl von verwendeten Lichtquellen 3 sowie eine Kalibrierung eines unteren Schwellwertes für die relativen Intensitätsmaxima zum Ausblenden des Rauschens erforderlich.

Insbesondere zur Kalibrierung als auch zur anschließenden Messung ist es vorteilhaft, wenn der optische Sensor 6 in seiner Lage in Erstreckung der ersten Hauptrichtung X und/oder in Erfassungsrichtung Y, d. h. im Sensorabstand a zu der zu vermessenden Werkstückkante 2 und/oder im Winkel zwischen der Erfassungsrichtung Y und der ersten Hauptrichtung X veränderbar angeordnet werden kann.

Nach Durchführung des Kalibrierungsvorganges ist eine Vermessung oder vielmehr eine Berechnung der Kontur der Werkstückkante 2 möglich. Eine Kalibrierung kann aber auch zwischen einzelnen oder mehreren Erfassungs- und Berechnungsprozessen wiederholt werden, um die Genauigkeit des Systems zu verifizieren. Nachfolgend wird nun die zur Berechnung der Kontur der Werkstückkante 2 erforderliche Vorgehensweise näher beschrieben.

In der in Fig. 2 beispielhaften Darstellung trifft bei dem Verfahren zur Erfassung beziehungsweise zur Berechnung der Kontur der Werkstückkante 2 der erste reflektierte Lichtstrahl 5-1 in der dritten von oben gesehenen kleinsten Erfassungseinheit 7.3 auf den optischen Sensor 6. Der Auftreffort, in diesem Fall die dritte von oben angeordnete kleinste Erfassungseinheit 7.3, der hierzu zugehörige erste Einfallwinkel $\alpha 1$ sowie die Intensität des von dem optischen Sensor 6 erfassten ersten reflektierten Lichtstrahles 5-1 und somit die Strahlungsintensität wird in einem nicht dargestellten elektronischen Speicher abgelegt.

In dem in Fig. 2 dargestellten Beispiel bildet der reflektierte Lichtstrahl 5-1 auf dem optischen Sensor 6 ein Intensitätsmaximum in der kleinsten Erfassungseinheit 7.3.

Dieses dort auftretende Intensitätsmaximum wird zunächst als ein relatives Intensitätsmaximum behandelt und abgespeichert. Dem späteren Verständnis wegen wird jedoch angemerkt, dass das in Fig. 2 durch den reflektierten Lichtstrahl 5-1 in der kleinsten Erfassungseinheit 7.3 hervorgerufene Intensitätsmaximum in dieser kleinsten Erfassungseinheit 7.3 auch das absolute Intensitätsmaximum bilden wird, da der reflektierte Lichtstrahl 5-1 an diesem dargestellten Fall exakt nach dem Reflexionsgesetz reflektiert wird, was bedeutet, dass der Winkel $\epsilon 1$ zwischen dem einfallenden Lichtstrahl 4-1 und der Lotrechten L1 der Kontur an der Stelle des Auftreffortes des einfallenden Lichtstrahles 4-1 gleich dem Winkel $\epsilon 1$ zwischen der Lotrechten L1 und dem reflektierten Lichtstrahl 5-1 ist, weshalb die Intensität des reflektierten Lichtstrahles 5-1 sehr hoch ist.

In derselben kleinsten Erfassungseinheit 7 können jedoch auch noch andere Intensitätsmaxima auftreten, die von anderen Eintrittswinkeln a herrühren können, da Teile des einfallenden Lichtstrahles 4 in der Form reflektiert werden können, dass der dadurch verursachte reflektierte Lichtstrahl 5 ein mindestens relatives Intensitätsmaximum in derselben kleinsten Erfassungseinheit 7, in diesem Beispiel in der Erfassungseinheit 7.3 verursachen kann. Da der einfallende Lichtstrahl 4 auch eine gewisse Breite aufweist, mit welcher insbesondere bei relativ kleinen Abmessungen der Werkstückkante 2 wie beispielsweise im Falle von Rasierklingen-Schneiden die gesamte Werkstückkante 2 beleuchtet wird, ist es auch möglich, dass bei entsprechender geometrischer Kontur der Werkstückkante 2 und entsprechendem Eintrittswinkel a auch unterschiedliche Reflexionen innerhalb der Breite des Lichtstrahles auftreten können, welche relative Intensitätsmaxima in beliebigen kleinsten Erfassungseinheiten 7 innerhalb der Abbildungshöhe H verursachen können.

Da, wie bereits vorhergehend erläutert, der einfallende Lichtstrahl 4 jedoch eine entsprechende Ausdehnung senkrecht zur Linie 4-1 besitzt, werden die anderen von der Linie 4-1 abweichenden Teile des einfallenden Lichtstrahles 4 zwar ebenfalls von der Oberfläche der Werkstückkante 2 reflektiert, diese Reflexionen erfolgen ebenfalls nach dem Reflexionsgesetz, was aber - zwar immer abhängig von der Kontur und den geometrischen Rahmenbedingungen des Messaufbaus - häufig dazu führt, dass diese Teile des reflektierten Lichtstrahles 5 den optischen Sensor 6 überhaupt nicht oder nur als Streulicht mit geringer Strahlungsintensität erreichen.

Insofern wird in der in Fig. 2 dargestellten beispielhaften Darstellung davon ausgegangen, dass nur der als Linie 4-1 dargestellte Bereich des einfallenden Lichtstrahles 4 für den ersten Eintrittswinkel $\alpha 1$ in der Form reflektiert wird, dass der als Linie 5-1 dargestellte Teil des reflektierten Lichtstrahles 5 für den Eintrittswinkel $\alpha 1$ ein absolutes Intensitätsmaximum in der kleinsten Erfassungseinheit 7.3 für den Eintrittswinkel $\alpha 1$ bildet. Es ist jedoch auch möglich, dass abhängig von der Kontur und den geometrischen Rahmenbedingungen pro Einfallwinkel $\alpha$ eine Mehrzahl von relativen Intensitätsmaxima in unterschiedlichen kleinsten Erfassungseinheiten 7 entstehen.

Ein relatives Intensitätsmaximum ist in diesem Fall ein Bereich mit einem Lichteinfall, wobei der Lichteinfall oberhalb eines definierbaren Schwellwertes liegt. Somit kann das diffus von der Werkstückkante 2 reflektierte Licht, welches üblicherweise deutlich unter einem Schwellwert liegt, für die spätere Berechnung ausgeblendet werden und es werden für die Berechnung nur die Bereiche berücksichtigt, in denen relativ hohe, nämlich über einem definierbaren Schwellwert liegende Strahlungsintensitäten der reflektierten Lichtstrahlen 5 berücksichtigt. Ein üblicher derartiger Schwellwert liegt beispielsweise bei 40% der von der Lichtquelle 3 emittierten Strahlungsintensität, was bedeutet, dass unter diesem Wert erfasste Strahlungsintensitäten nicht erfasst werden, um die grundsätzlich vorhandene diffuse Reflexion oder Umwelteinflüsse im Sinne eines Rauschens ausgeblendet werden.

Insofern wird für die Berechnung der Kontur der Werkstückkante 2 in einer nicht dargestellten Speicher- und/oder Recheneinrichtung abgelegt, dass für den ersten Eintrittswinkel $\alpha 1$ bei den bekannten geometrischen Verhältnissen ein erstes relatives Intensitätsmaximum in der kleinsten Erfassungseinheit 7.3 aufgetreten ist, ferner wird hierzu auch bei dem jeweiligen Intensitätsmaximum aufgetretene Strahlungsintensität in einer nicht dargestellten Speicher- und/oder Recheneinrichtung abgelegt.

Fig. 2 zeigt ferner einen zweiten einfallenden Lichtstrahl 4-2, der unter dem Eintrittswinkel $\alpha 2$ auf die zu vermessende Werkstückkante 2 auftrifft und in den mit der Linie 5-2 dargestellten reflektierten Lichtstrahl 5-2, welcher gemäß dem Reflexionsgesetz reflektiert wird. Sowohl die zweite Lichtquelle 3-2 als auch der einfallende Lichtstrahl 4-2 und der zweite reflektierte Lichtstrahl 5-2 sind der besseren Übersichtlichkeit wegen als punktierte Linien dargestellt.

Die zweite Lichtquelle 3-2 kann entweder eine zusätzlich zur ersten Lichtquelle 3-1 vorhandene und um den Winkelversatz $\varphi$ zur ersten Lichtquelle 3-1 versetzt angeordnete Lichtquelle 3 sein. Erfindungsgemäß ist vorgesehen, dass die als zweite Lichtquelle 3-2 dargestellte Lichtquelle 3 identisch mit der ersten Lichtquelle 3-1 ist, jedoch um den Winkelversatz φ zur ersten Position versetzt ist. Wesentlich ist jedoch, dass die zu vermessende Werkstückkante 2 nicht gleichzeitig, sondern sequentiell und somit nacheinander aus den verschiedenen Eintrittswinkeln α - gemäß der Fig. 2 sind dies die zwei dargestellten Winkel α1 und α2 - beleuchtet wird.

Auch in der Position der zweiten Lichtquelle 3-2 trifft wieder ein zweiter einfallender Lichtstrahl 4-2 mit einer Erstreckung senkrecht zur Einfallsrichtung auf, so dass zumindest ein Teilbereich der Werkstückkante 2 beleuchtet wird. Aus diesem Grund kann ein Teil des einfallenden zweiten Lichtstrahles 4-2 von der Kontur der Werkstückkante 2 in der Form reflektiert werden, dass auch ein gewisses reflektiertes Streulicht auf den optischen Sensor 6 auftrifft.

Gemäß der in Fig. 2 dargestellten Geometrie wird jedoch nur der mit der Linie 4-2 als zweiter einfallender Lichtstrahl 4 dargestellter Teil in der Form von der Kontur reflektiert, als dass nur der als Linie 5-2 dargestellte zweite reflektierte Lichtstrahl 5-2 in der Form von der Kontur der Werkstückkante 2 reflektiert wird, als dass dieser auf dem optischen Sensor 6 ein relatives Intensitätsmaximum in der kleinsten Erfassungseinheit 7.6 hervorgerufen wird.

Insofern wird für die Berechnung der Kontur der Werkstückkante 2 in einer zeichnerisch nicht dargestellten Speicher- und/oder Recheneinrichtung abgelegt, dass für den zweiten Eintrittswinkel α2 bei den bekannten geometrischen Verhältnissen ein relatives Intensitätsmaximum mit entsprechender Strahlungsintensität in der kleinsten Erfassungseinheit 7.6 aufgetreten ist.

In der Praxis werden für eine Vielzahl unterschiedlicher Einfallwinkel α, welche üblicherweise in einem Bereich von in etwa 0° bis in etwa 90°, vorzugsweise in einem Bereich von in etwa 10° bis in etwa 80° liegen, derartige Messungen und Hinterlegungen der Einfallwinkel mit dem oder den jeweils zugehörigen relativen Intensitätsmaxima durchgeführt.

Je geringer der Winkelversatz φ zwischen den Positionen der mindestens einen Lichtquelle 3 bei den jeweiligen Messungen ist, umso höher ist die erzielbare Auflösung der Oberflächenkontur als auch die Messgenauigkeit insgesamt.

Der Winkelversatz φ zwischen den jeweiligen Lichtquellen 3 und somit zwischen den unterschiedlichen Eintrittswinkeln α beträgt üblicherweise zwischen 1° und 10°, vorzugsweise zwischen 2° und 5°, so dass eine hinreichende Abtastgenauigkeit erreicht wird.

Nach der sequentiellen Erfassung der relativen Intensitätsmaxima für alle unterschiedlichen Einfallwinkel α wird für jede kleinste Erfassungseinheit 7.1 bis 7.6 des optischen Sensors 6 unter gegebenenfalls allen dort erfassten relativen Intensitätsmaxima für jede kleinste Erfassungseinheit 7 aus den relativen Intensitätsmaxima dasjenige mit der höchsten Strahlungsintensität eines reflektierten Lichtstrahles 5 samt dem zugehörigem Eintrittswinkel α ermittelt. Dieses aus allen relativen Intensitätsmaxima ermittelte Intensitätsmaximum mit der höchsten Strahlungsintensität wird als absolutes Intensitätsmaximum für die jeweilige kleinste Erfassungseinheit 7 bezeichnet und nur dieses wird für die nachfolgende Berechnung der Kontur der Werkstückkante 2 herangezogen.

Dies bedeutet, dass in dem in Fig. 2 dargestellten Beispiel für die kleinsten Erfassungseinheiten 7.1 bis 7.6 unter allen in den jeweiligen kleinsten Erfassungseinheiten 7.1 bis 7.6 aufgetretenen relativen Intensitätsmaxima jeweils, das heißt pro kleinster Erfassungseinheit 7.1 bis 7.6, dasjenige absolute Intensitätsmaximum mit der höchsten Strahlungsintensität des reflektierten Strahles bestimmt wird. Liegen beispielsweise in der kleinsten Erfassungseinheit 7.3 insgesamt 8 relative Strahlungsmaxima mit einer Strahlungsintensität von 60% bis 90% des emittierten Lichts, so wird für die weitere Berechnung in dieser kleinsten Erfassungseinheit 7.3 zur weiteren Berechnung der Kontur nur das eine für diese kleinste Erfassungseinheit 7.3 absolute Intensitätsmaximum mit 90% der emittierten Strahlungsenergie herangezogen.

Durch dieses Auswahlverfahren des absoluten Intensitätsmaximums je kleinster Erfassungseinheit 7 werden somit weitere mehr oder weniger diffuse Reflexionen ausgeschlossen. Bei dem in Fig. 2 dargestelltem Beispiel wird, wie oben bereits angedeutet, das absolute Intensitätsmaximum in der kleinsten Erfassungseinheit 7.3 durch den reflektierten Lichtstrahl 5-1 verursacht, da in diesem Fall eine direkte Reflexion gemäß dem Reflexionsgesetz erfolgt.

In Fig. 3 sind die geometrischen Verhältnisse dargestellt, wie diese für den in Fig. 2 dargestellten ersten Eintrittswinkel α1 hergeleitet werden.

Aufgrund der ersten Position der ersten Lichtquelle 3-1 ist der erste Eintrittswinkel α1 auf die Werkstückkante 2 bekannt. Ferner ist bekannt, dass in der kleinsten Erfassungseinheit 7.3 ein relatives Intensitätsmaximum auftritt, woraus sich der erste Austrittswinkel β1 berechnen lässt.

Zur Berechnung des Austrittswinkels β1 wird, da aufgrund der in der Praxis vorhandenen Breite des auftreffenden Lichtstrahles 4-1 der den reflektierten Lichtstrahl 5-1 verursachende Ort auf der Werkstückkante 2 nicht bekannt ist, aufgrund des in der Praxis sehr geringen Sensorabstandes a zwischen optischem Sensor 6 und Werkstück 1 als Auftreffort der Punkt auf der Werkstückkante 2 in Erstreckung der ersten Hauptrichtung X angenommen, der der jeweiligen kleinsten Erfassungseinheit 7 in Erstreckung der ersten Hauptrichtung X entspricht, was anders ausgedrückt bedeutet, dass als Austrittswinkel β1 immer der Erfassungswinkel des optischen Winkels zur ersten Hauptrichtung X angenommen wird. In dem in Fig. 2 dargestellten Beispiel bedeutet dies die Annahme eines Austrittswinkels β1 von 90°. Diese Näherung kann zwar zu geringfügigen Abweichungen des Steigungswinkels γ der Kontur in Bezug auf die erste Hauptrichtung X bedeuten, in der Praxis ist die dadurch

Aus dem bekannten Eintrittswinkel $\alpha 1$ und dem errechneten oder angenommenen Austrittswinkel $\beta 1$ kann somit die Winkelhalbierende W1 zwischen dem ersten einfallenden Lichtstrahl 4-1 und dem ersten reflektiertem Lichtstrahl 5-1 berechnet werden, welche aufgrund des Reflexionsgesetzes gleichzeitig die Lotrechte L auf dem Flächenabschnitt ist, von welchem der erste einfallende Lichtstrahl 4-1 in den ersten reflektierten Lichtstrahl 5-1 reflektiert wurde.

Nachdem die Lotrechte L1 über die Winkelhalbierende W1 bestimmt wurde, kann somit der Steigungswinkel $\gamma 1$ an der relevanten Stelle in Erstreckung der ersten Hauptrichtung X leicht bestimmt werden, und somit der jeweilige Steigungswinkel $\gamma$ der Kontur Werkstückkante 2 in Erstreckung der ersten Hauptrichtung X. Aufgrund möglichst feiner Abtastschritte kann für eine Vielzahl von Stellen entsprechend den kleinsten Erfassungseinheiten 7 und somit in einem sehr feinen Raster der in der jeweiligen kleinsten Erfassungseinheit 7 vorliegende Steigungswinkel $\gamma$ errechnet werden, woraus sich die Kontur sehr exakt herleiten lässt.

Anhand der pro kleinster Erfassungseinheit 7 relevanten jeweiligen absoluten Intensitätsmaxima und den zugehörigen Eintrittswinkeln $\alpha$ und den zugehörigen Austrittswinkeln $\beta$ wird die Winkelhalbierende W zwischen dem einfallenden Lichtstrahl 4 und dem reflektierten Lichtstrahl 5 gemäß der Figurenbeschreibung zu Figur 3 ermittelt.

Da die Winkelhalbierende W gleichzeitig die Lotrechte L zur dem entsprechenden Teil der Kontur der Werkstückkante 2 ist, auf welchem der einfallende Lichtstrahl 4 auftrifft und in den reflektierten Lichtstrahl 5 reflektiert wird, kann über die Normale auf die Lotrechte L, das heißt über eine 90°-Drehung der Lotrechten L der Steigungswinkel $\gamma$ der Kontur der Werkstückkante 2 in der in der jeweiligen kleinsten Erfassungseinheit 7 abgebildeten Konturstück der Werkstückkante 2 in Bezug auf die erste Hauptrichtung X ermittelt werden.

Anhand der pro kleinster Erfassungseinheit 7 zugehörigen Steigungswinkels $\gamma$ der Kontur der Werkstückkante 2 kann in Bezug auf die erste Hauptrichtung X die Kontur der Werkstückkante 2 über die gesamte Kantenhöhe h errechnet werden, da zum einen der Steigungswinkel $\gamma$ für jede kleinste Erfassungseinheit 7 bekannt ist und die so errechneten Linien in den jeweiligen kleinsten Erfassungseinheiten 7 aneinandergrenzen.

Bei einer Auflösung des optischen Sensors, bei welcher die kleinste Erfassungseinheit 7 eine Höhe von 4,5 $\mu$m aufweist und einer Beleuchtung der Werkstückkante 2 mit einem Winkelversatz $\varphi$ von 1 Grad konnte die Kontur einer Rasierklinge im Vergleich zu einem mechanischen Abtastverfahren mit einer Winkelgenauigkeit der Steigungswinkel $\gamma$ im Bereich jeder kleinsten Erfassungseinheit 7 mit einer Genauigkeit von $\pm$ 0,5 Grad hergeleitet werden.

Für die Durchführung eines derartigen Verfahrens können unterschiedliche Messaufbauten und Konfigurationen zum Einsatz kommen.

Die Fig. 4 und 5 zeigen hierfür jeweils einen Messaufbau, bei welchem das Werkstück 1 und somit auch die Werkstückkante 2 als auch der optische Sensor 6 während der Vermessung der Werkstückkante 2 als auch während der Kalibrierung eine räumlich unveränderliche Position innehaben. Zur Erreichung der unterschiedlichen Eintrittswinkel $\alpha$ wird die zu vermessende Werkstückkante 2 mittels mindestens einer Lichtquelle 3 in unterschiedlichen Eintrittswinkeln $\alpha$ angestrahlt.

Fig. 4 zeigt hierzu eine beispielhafte Ausführung, bei welcher zur Erzielung unterschiedlicher Eintrittswinkel $\alpha$ eine Lichtquelle 3 eine in etwa kreisförmige Schwenkbewegung um eine Rotationsachse, welche im Wesentlichen parallel zur zu vermessenden Werkstückkante 2 ist, ausgeführt wird. Hierzu kann beispielsweise die Lichtquelle 3 an einem nicht dargestellten schwenkbaren Arm oder auf einem kreisbogensegmentförmigen Führungsstruktur antreibbar gelagert sein. Der Winkelversatz $\varphi$ kann bei dieser Ausführung beliebig verändert werden.

Wenngleich in Fig. 4 nicht dargestellt, so ist es auch möglich, mehr als eine Lichtquelle 3 auf der gleichen mechatronischen Komponente zur Verstellung der Lichtquelle 3 und somit zur Veränderung des Eintrittswinkels $\alpha$ anzuordnen. So kann beispielsweise eine erste Lichtquelle 3 an einer Messung durch Beleuchtung der Werkstückkante 2 mitwirken, während die zweite Lichtquelle 3 auf den neuen Eintrittswinkel $\alpha$ verstellt wird.

Fig. 5 zeigt eine Ausführung, bei welcher das Werkstück 1 und somit die Werkstückkante 2 als auch der optische Sensor 6 eine räumlich unveränderliche Position während des Mess- und des Kalibriervorganges innehaben, aber bei welcher zur Sicherstellung unterschiedlicher Eintrittswinkel $\alpha$ eine Mehrzahl von sequentiell leuchtenden Lichtquellen 3 eingesetzt wird, welche in etwa kreisbogenförmig um die zu vermessende Werkstückkante 2 angeordnet sind. Die durch das Kreisbogensegment aufgespannte Ebene ist hierbei vorzugsweise im Wesentlichen senkrecht zur Erstreckung der Werkstückkante 2 angeordnet. Die jeweiligen Lichtquellen 3 sind zueinander derart um einen Winkelversatz $\varphi$ versetzt, so dass die Werkstückkante 2 bei Beleuchtung durch benachbarte Lichtquellen 3 unter einem definierten Winkelversatz $\varphi$ und somit unter jeweils unterschiedlichen Eintrittswinkeln $\alpha$ angestrahlt wird.

Bei Einsatz einer Mehrzahl von Lichtquellen 3 ist es jedoch zur Erzielung gleichwertiger relativer Intensitätsmaxima und daraus abgeleiteter absoluter Intensitätsmaxima erforderlich, dass die Werkstückkante 2 von allen Lichtquellen 3 mit derselben Intensität angestrahlt wird. Es ist hierbei auch möglich, Lichtquellen 3 zu verwenden, welche die Werkstückkante 2 alle mit derselben Wellenlänge oder mit unterschiedlichen Wellenlängen beleuchten.

Wenngleich zeichnerisch nicht in den Figuren 4 und 5 dargestellt, so ist es auch möglich, dass die reflektierten Lichtstrahlen 5 mit mindestens zwei redundanten optischen Sensoren 6 zeitgleich zur Erzielung einer besseren Auflösung und/oder des Ausblendens des Rauschens erfasst werden. Aufgrund der geringen Baugrößen derartiger CCD- oder CMOS-Sensoren ist dies ohne größeren räumlichen Aufwand realisierbar.

Auch wenn es aus den Figuren 4 und 5 aufgrund der gewählten Perspektive nicht eindeutig hervorgeht, so ist es auch möglich, den mindestens einen optischen Sensor 6 und die mindestens eine Lichtquelle 3 in Erstreckung parallel zur Werkstücckante 2 und somit in Längsrichtung des Werkstückes 1 zueinander vorzugsweise geringfügig zu versetzen, so dass eine räumliche Kollision der mindestens einen beweglich oder unbeweglich angeordneten Lichtquelle 3 mit dem mindestens einen optischen Sensor 6 auszuschließen.

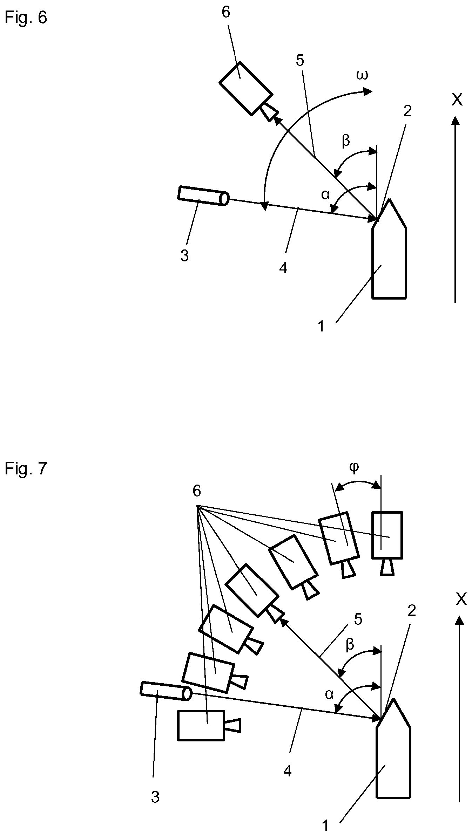

Die Fig. 6 und 7 zeigen hierfür jeweils einen beispielhaften Messaufbau, bei welchem das Werkstück 1 und somit auch die Werkstückkante 2 als auch die Lichtquelle 3 während der Vermessung der Werkstückkante 2 als auch während der Kalibrierung eine räumlich unveränderliche Position innehaben. Zur Erreichung unterschiedlicher Betrachtungswinkel wird die zu vermessende Werkstückkante 2 mittels mindestens eines optischen Sensors 6 aus in unterschiedlichen Winkeln erfasst.

Fig. 6 zeigt hierzu eine beispielhafte Ausführung, bei welcher ein optischer Sensor 6 eine in etwa kreisförmige Schwenkbewegung um eine Rotationsachse, welche im Wesentlichen parallel zur zu vermessenden Werkstückkante 2 ist, ausgeführt wird. Hierzu kann beispielsweise der mindestens eine optische Sensor 6 an einem nicht dargestellten schwenkbaren Arm oder auf einem kreisbogensegmentförmigen Führungsstruktur antreibbar gelagert sein.

Fig. 7 zeigt eine beispielhafte Ausführung, bei welcher das Werkstück 1 und somit die Werkstückkante 2 als auch die Lichtquelle 3 eine räumlich unveränderliche Position während des Mess- und des Kalibriervorganges innehaben, aber bei welcher zur Sicherstellung unterschiedlicher Betrachtungswinkel eine Mehrzahl von sequentiell die Werkstückkante 2 erfassenden optischen Sensoren 6 eingesetzt werden, welche in etwa kreisbogenförmig um die zu vermessende Werkstückkante 2 angeordnet sind. Die durch das Kreisbogensegment aufgespannte Ebene ist hierbei vorzugsweise im Wesentlichen senkrecht zur Erstreckung der Werkstückkante 2 angeordnet. Die jeweiligen optischen Sensoren 6 sind zueinander derart um einen Winkelversatz φ versetzt, so dass die Werkstückkante 2 unter einem definierten Winkelversatz φ erfasst wird.

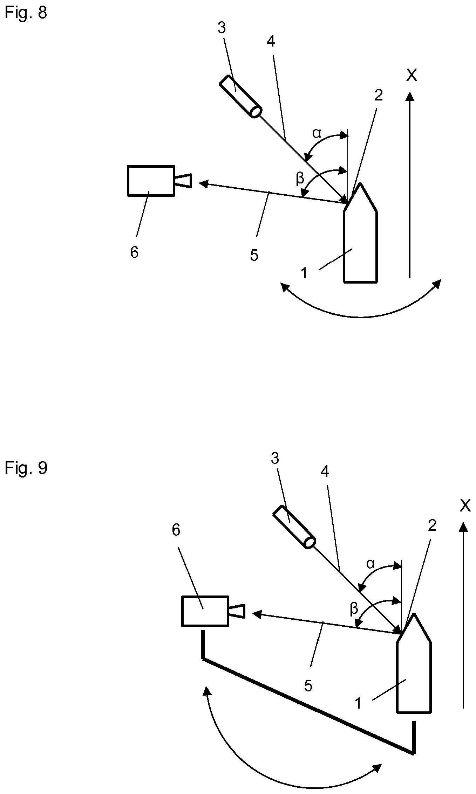

Fig. 8 zeigt eine beispielhafte Ausführung, bei welcher das Werkstück 1 und somit die Werkstückkante 2 während der Vermessung eine räumlich veränderliche Position innehat, nämlich dergestalt, dass das Werkstück 1 eine rotative Bewegung vorzugsweise um eine durch die zu vermessende Werkstückkante 2 verlaufende Achse in Erstreckung parallel zur Werkstückkante 2 ausführt. Die mindestens eine Lichtquelle 3 und der mindestens eine optische Sensor 6 nehmen während der Vermessung eine räumlich unveränderliche Position ein, so dass die von der räumlich veränderlichen Position innehabende Werkstückkante 2 reflektierten Lichtstrahlen 5 in Abhängigkeit des konturabhängigen Austrittswinkels β erfasst werden.

Fig. 9 zeigt eine weitere beispielhafte Ausführung einer Anordnung zur Durchführung des Messverfahrens. Bei dieser Ausführung haben das Werkstück 1 und somit die Werkstückkante 2 während der Vermessung eine räumlich veränderliche Position inne, wobei der mindestens eine optische Sensor 6 während der Vermessung eine definierte und unveränderliche Position zur zu vermessenden Werkstückkante 2 aufweist, was in Fig. 9 durch die symbolisch als Klammer dargestellte Verbindung zwischen dem optischen Sensor 6 und dem Werkstück 1 dargestellt ist.

Die mindestens eine Lichtquelle 3 nimmt während der Vermessung eine räumlich unveränderliche Position ein, so dass die von der räumlich veränderlichen Position innehabende Werkstückkante 2 reflektierten Lichtstrahlen 5 in Abhängigkeit des konturabhängigen Austrittswinkels β erfasst werden.

**Patentansprüche**

1. Verfahren zur berührungsfreien Vermessung der Kontur einer Werkstückkante (2) eines Werkstückes (1), wobei sich die Werkstückkante (2) an eine Werkstückfläche mit Erstreckung in einer ersten Hauptrichtung X anschließt, und wobei die Werkstückkante (2) in Erstreckung der ersten Hauptrichtung X eine Kantenhöhe h aufweist, und wobei die Werkstückkante (2) von mindestens einer Lichtquelle (3) angestrahlt wird, so dass ein in einer Erstreckung in der ersten Hauptrichtung X auf die Werkstückkante (2) unter einem Einfallwinkel α in Bezug auf die erste Hauptrichtung X einfallender Lichtstrahl (4) in einen zugehörigen reflektierten Lichtstrahl (5) reflektiert wird, und wobei jeder reflektierte Lichtstrahl (5) in Abhängigkeit der Kontur der Werkstückkante (2) in Erstreckung der ersten Hauptrichtung X einen konturabhängigen Austrittswinkel β aufweist, wobei die reflektierten Lichtstrahlen (5) von mindestens einem optischen Sensor (6) mit einer Erfassungsrichtung Y erfasst werden, wobei der mindestens eine optische Sensor (6) eine Abbildungshöhe H aufweist, wobei die Abbildungshöhe H die Abmessung des lichtempfindlichen Sensors (6) in Erstreckung im Wesentlichen parallel zur ersten Hauptrichtung X ist, und wobei die Kontur der Werkstückkante (2) anhand der von dem optischen Sensor (6) erfassten Strahlungsintensität der reflektierten Lichtstrahlen (5) in Abhängigkeit des konturabhängigen Austrittswinkels β in Bezug auf den Einfallwinkel α errechnet wird, wobei die Werkstückkante (2) als auch der optische Sensor (6) während der Vermessung eine räumlich unveränderliche Position innehaben und wobei die Werkstückkante (2) mittels mindestens einer Lichtquelle (3) in unterschiedlichen Einfallswinkeln α angestrahlt wird, wobei eine Mehrzahl von sequentiell leuchtenden Lichtquellen (3) in etwa kreisbogenförmig um die Werkstückkante (2) angeordnet ist, wobei die durch das Kreisbogensegment aufgespannte Ebene im Wesentlichen senkrecht zur Erstreckung der Werkstückkante (2) angeordnet ist, und wobei die Lichtquellen (3) zueinander derart versetzt sind, dass die Werkstückkante (2) bei Beleuchtung benachbarter Lichtquellen (3) unter einem definierten Winkelversatz φ angestrahlt wird.

2. Verfahren nach Anspruch 1, **dadurch gekennzeichnet, dass** die Abbildungshöhe H des mindestens einen optischen Sensors (6) gleich groß oder größer als die Kantenhöhe h ist.

3. Verfahren nach Anspruch 1, **dadurch gekennzeichnet, dass** die Werkstückkante (2) mit einer Mehrzahl von Lichtquellen (3) angestrahlt wird, wobei die Mehrzahl der Lichtquellen (3) während der Vermessung eine räumlich unveränderliche Position innehaben und wobei die reflektierten Lichtstrahlen (5) in unterschiedlichen Winkeln zur Werkstückkante (2) durch mindestens einen optischen Sensor (6) erfasst werden.

4. Verfahren nach Anspruch 1, **dadurch gekennzeichnet, dass** die reflektierten Lichtstrahlen (5) mit mindestens zwei redundanten optischen Sensoren (6) zeitgleich zur Erzielung einer besseren Auflösung und/oder des Ausblendens des Rauschens erfasst werden.

5. Verfahren nach einem der vorhergehenden Ansprüche, **dadurch gekennzeichnet, dass** die Werkstückkante (2) von allen Lichtquellen (3) mit derselben Intensität angestrahlt wird.

6. Verfahren nach einem der vorhergehenden Ansprüche, **dadurch gekennzeichnet, dass** die Werkstückkante (2) von allen Lichtquellen (3) mit derselben Wellenlänge oder mit unterschiedlichen Wellenlängen angestrahlt wird.

7. Verfahren nach einem der vorhergehenden Ansprüche, **dadurch gekennzeichnet, dass** als optischer Sensor (6) ein in mindestens in Erstreckung der ersten Hauptrichtung X ein in einer Längeneinheit skalierter oder skalierbarer optischer Sensor (6) mit einer definierten Auflösung mit einer Abbildungshöhe H von mindestens der Kantenhöhe h verwendet wird.

8. Verfahren nach einem der vorhergehenden Ansprüche, **dadurch gekennzeichnet, dass** die Kontur der Werkstückkante (2) in der Form berechnet wird, wobei das Berechnungsverfahren folgende Schritte umfasst, nämlich dass

- zu jedem definierten Eintrittswinkel α eines einfallenden Lichtstrahles (4) ein jeweiliges relatives Intensitätsmaximum des reflektierten Lichtstrahles (5) sowie dessen Lage innerhalb der Abbildungshöhe H auf dem optischen Sensor (6) erfasst wird,
- nach sequentieller Erfassung der relativen Intensitätsmaxima für unterschiedliche Einfallswinkel α für jede kleinste Erfassungseinheit (7) des optischen Sensors (6) unter gegebenenfalls allen dort erfassten relativen Intensitätsmaxima das dort erfasste absolute Intensitätsmaximum mit der höchsten Strahlungsintensität eines reflektierten Lichtstrahles (5) samt zugehörigem Eintrittswinkel α ermittelt wird,
- pro kleinster Erfassungseinheit (7) des optischen Sensors (6) für das absolute Intensitätsmaximum und zugehörigem Eintrittswinkel α der zugehörige Austrittswinkel β ermittelt wird,
- anhand der pro kleinster Erfassungseinheit (7) für die jeweiligen absoluten Intensitätsmaxima und den zughörigen Eintrittswinkeln α und Austrittswinkeln β die Winkelhalbierende W zwischen dem einfallenden Lichtstrahl (4) und dem reflektierten Lichtstrahl (5) und anhand der Normalen auf die Winkelhalbierende W der Steigungswinkel γ der Kontur der Werkstückkante (2) in der zu der jeweiligen kleinsten Erfassungseinheit (7) zugehörigen Erstreckung auf der Werkstückkante (2) ermittelt wird,
- anhand des pro kleinster Erfassungseinheit (7) zugehörigen Winkels der Kontur der Werkstückkante zur ersten Hauptrichtung die Kontur über die gesamte Kantenhöhe errechnet wird.

9. Verfahren nach einem der vorhergehenden Ansprüche, **dadurch gekennzeichnet, dass** vor und/oder zwischen der Berechnung der Kontur der Werkstückkante (2) folgende Schritte zur Kalibrierung durchgeführt werden, nämlich dass

- der Winkel δ zwischen der Erfassungsrichtung Y des optischen Sensors (6) und mindestens einer Lichtquelle (3) erfasst wird,
- der mindestens eine optische Sensor (6), mindestens eine Lichtquelle (3) und das Werkstück (1) mit der zu vermessenden Werkstückkante (2) unter Beibehaltung des im ersten Schritt erfassten Winkels δ zur Kalibrierung der ersten Hauptrichtung X zueinander in der Form ausgerichtet, dass durch die von der in Erstreckung der ersten Hauptrichtung X ausgerichtete Werkstückfläche reflektierten Lichtstrahlen (5) ein flächiges Intensitätsmaximum auf dem optischen Sensor (6) gebildet wird,
- der mindestens eine optische Sensor (6) in der Form kalibriert wird, dass die Kantenhöhe h auf der Abbildungshöhe H definiert wird,

**10.** Verfahren nach einem der vorhergehenden Ansprüche, **dadurch gekennzeichnet, dass** ein Werkstück (1) mit zwei gegenüberliegenden Werkstückkanten (2) wie beispielsweise eine Klinge in der Form vermessen wird, dass ein Verfahren gemäß den vorhergehenden Ansprüchen spiegelbildlich zeitgleich oder zeitlich versetzt auf einer Mehrzahl der relevanten Seiten des Werkstückes (1) durchgeführt wird.

**Claims**

**1.** Method for non-contact measurement of the contour of a workpiece edge (2) of a workpiece (1), wherein the workpiece edge (2) adjoins a workpiece surface with extension in a first main direction X, and wherein the workpiece edge (2) has an edge height h in the extension of the first main direction X, and wherein the workpiece edge (2) is illuminated by at least one light source (3), so that a light beam (4) incident on the workpiece edge (2) in an extension in the first main direction X at an angle of incidence $\alpha$ with respect to the first main direction X is reflected into an associated reflected light beam (5), and wherein each reflected light beam (5) has a contour-dependent exit angle $\beta$ as a function of the contour of the workpiece edge (2) in the extension of the first main direction X, wherein the reflected light beams (5) are detected by at least one optical sensor (6) with a detection direction Y, wherein the at least one optical sensor (6) has an imaging height H, wherein the imaging height H is the dimension of the light-sensitive sensor (6) in an extension substantially parallel to the first main direction X, and wherein the contour of the workpiece edge (2) is calculated on the basis of the radiation intensity of the reflected light beams (5) detected by the optical sensor (6) as a function of the contour-dependent exit angle $\beta$ in relation to the angle of incidence $\alpha$, wherein the workpiece edge (2) as well as the optical sensor (6) have a spatially invariable position during the measurement and wherein the workpiece edge (2) is illuminated at different angles of incidence $\alpha$ by means of at least one light source (3), wherein a plurality of sequentially illuminating light sources (3) are arranged approximately in the shape of a circular arc around the workpiece edge (2), wherein the plane defined by the circular arc segment is arranged substantially perpendicular to the extent of the workpiece edge (2), and wherein the light sources (3) are offset relative to one another in such a way that the workpiece edge (2) is illuminated at a defined angular offset $\varphi$ when neighbouring light sources (3) are illuminated.

**2.** Method according to claim 1, **characterised in that** the imaging height H of the at least one optical sensor (6) is equal to or greater than the edge height h.

**3.** Method according to claim 1, **characterised in that** the workpiece edge (2) is illuminated with a plurality of light sources (3), wherein the plurality of light sources (3) have a spatially invariable position during the measurement and wherein the reflected light beams (5) are detected at different angles to the workpiece edge (2) by at least one optical sensor (6).

**4.** Method according to claim 1, **characterised in that** the reflected light beams (5) are detected simultaneously by at least two redundant optical sensors (6) in order to achieve a better resolution and/or to suppress the noise.

**5.** Method according to one of the preceding claims, **characterised in that** the workpiece edge (2) is illuminated by all light sources (3) with the same intensity.

**6.** Method according to one of the preceding claims, **characterised in that** the workpiece edge (2) is illuminated by all light sources (3) with the same same wavelength or with different wavelengths.

**7.** Method according to one of the preceding claims, **characterised in that** the optical sensor (6) used is an optical sensor (6) which is scaled or scalable in a unit of length in at least the extension of the first main direction X and has a defined resolution with an imaging height H of at least the edge height h.

**8.** Method according to one of the preceding claims, **characterised in that** the contour of the workpiece edge (2) is calculated in the shape, the calculation method comprising the following steps, namely that

- for each defined angle of incidence $\alpha$ of an incident light beam (4), a respective relative intensity maximum of the reflected light beam (5) and its position within the imaging height H on the optical sensor (6) are detected,
- after sequential detection of the relative intensity maxima for different angles of incidence $\alpha$ for each smallest detection unit (7) of the optical sensor (6), the absolute intensity maximum detected there with the highest radiation intensity of a reflected light beam (5) together with the associated angle of incidence $\alpha$ is determined from any relative intensity maxima detected there,
- the associated exit angle $\beta$ is determined for each smallest detection unit (7) of the optical sensor (6) for the absolute intensity maximum and associated angle of incidence $\alpha$,

- the angle bisector W between the incident light beam (4) and the reflected light beam (5) is determined using the per smallest detection unit (7) for the respective absolute intensity maxima and the associated entry angles $\alpha$ and exit angles $\beta$ and the gradient angle $\gamma$ of the contour of the workpiece edge (2) in the extension on the workpiece edge (2) associated with the respective smallest detection unit (7) is determined using the normal to the angle bisector W,

- the contour is calculated over the entire edge height using the angle of the contour of the workpiece edge to the first main direction associated with each smallest detection unit (7).

9. Method according to one of the preceding claims, **characterised in that the** following steps for calibration are carried out before and/or between the calculation of the contour of the workpiece edge (2), namely that

- the angle $\delta$ between the detection direction Y of the optical sensor (6) and at least one light source (3) is detected,

- the at least one optical sensor (6), at least one light source (3) and the workpiece (1) are aligned with the workpiece edge (2) to be measured while maintaining the angle $\delta$ detected in the first step for calibrating the first main direction X in such a way that a planar intensity maximum is formed on the optical sensor (6) by the light rays (5) reflected by the workpiece surface aligned in the extension of the first main direction X,

- the at least one optical sensor (6) is calibrated in such a way that the edge height h is defined at the imaging height H.

10. Method according to one of the preceding claims, **characterised in that** a workpiece (1) with two opposing workpiece edges (2), such as a blade, is measured in such a way that a method according to the preceding claims is carried out in mirror image simultaneously or with a time delay on a plurality of the relevant sides of the workpiece (1).

**Revendications**

1. Procédé de mesure sans contact du contour d'un bord de pièce (2) d'une pièce (1), le bord de pièce (2) se raccordant à une surface de pièce s'étendant dans une première direction principale X, et le bord de pièce (2) présentant une hauteur de bord h dans l'extension de la première direction principale X, et le bord de pièce (2) étant éclairé par au moins une source lumineuse (3), de sorte qu'un faisceau lumineux (4) incident sur le bord de la pièce (2) dans une extension dans la première direction principale X sous un angle d'incidence $\alpha$ par rapport à la première direction principale X est réfléchi en un faisceau lumineux réfléchi associé (5), et chaque rayon lumineux réfléchi (5) présentant un angle de sortie $\beta$ dépendant du contour du bord de la pièce (2) dans l'extension de la première direction principale X, les rayons lumineux réfléchis (5) étant détectés par au moins un capteur optique (6) avec une direction de détection Y, le au moins un capteur optique (6) présentant une hauteur de représentation H, la hauteur de représentation H étant la dimension du capteur photosensible (6) dans une extension essentiellement parallèle à la première direction principale X, et le contour du bord de la pièce (2) étant calculé à l'aide de l'intensité de rayonnement des rayons lumineux réfléchis (5) détectée par le capteur optique (6) en fonction de l'angle de sortie $\beta$ dépendant du contour par rapport à l'angle d'incidence $\alpha$, le bord de la pièce (2) ainsi que le capteur optique (6) occupant une position invariable dans l'espace pendant la mesure et le bord de la pièce (2) étant éclairé à l'aide d'au moins une source lumineuse (3) selon différents angles d'incidence $\alpha$, une pluralité de sources lumineuses (3) éclairant séquentiellement étant disposée à peu près en arc de cercle autour de l'arête (2) de la pièce, le plan défini par le segment d'arc de cercle étant disposé sensiblement perpendiculairement à l'extension de l'arête (2) de la pièce, et les sources lumineuses (3) étant décalées les unes par rapport aux autres de telle sorte que l'arête (2) de la pièce est éclairée avec un décalage angulaire $\varphi$ défini lorsque des sources lumineuses (3) voisines sont éclairées.

2. Procédé selon la revendication 1, **caractérisé en ce que** la hauteur d'image H du au moins un capteur optique (6) est égale ou supérieure à la hauteur de bord h.

3. Procédé selon la revendication 1, **caractérisé en ce que** le bord de la pièce (2) est éclairé par une pluralité de sources lumineuses (3), la pluralité de sources lumineuses (3) occupant une position invariable dans l'espace pendant la mesure et les rayons lumineux réfléchis (5) étant détectés sous différents angles par rapport au bord de la pièce (2) par au moins un capteur optique (6).

4. Procédé selon la revendication 1, **caractérisé en ce que** les rayons lumineux réfléchis (5) sont détectés simultanément par au moins deux capteurs optiques redondants (6) afin d'obtenir une meilleure résolution et/ou de supprimer le bruit.

5. Procédé selon l'une des revendications précédentes, **caractérisé en ce que** le bord de la pièce (2) est éclairé par toutes les sources lumineuses (3) avec la même intensité.

6. Procédé selon l'une des revendications précédentes, **caractérisé en ce que** le bord de la pièce (2) est éclairé par toutes les sources lumineuses (3) avec la même longueur d'onde ou avec des longueurs d'onde différentes.

7. Procédé selon l'une des revendications précédentes, **caractérisé en ce que** l'on utilise comme capteur optique (6) un capteur optique (6) gradué ou pouvant être gradué en une unité de longueur au moins dans l'extension de la première direction principale X, avec une résolution définie avec une hauteur de représentation H d'au moins la hauteur de bord h.

8. Procédé selon l'une des revendications précédentes, **caractérisé en ce que** le contour du bord de la pièce (2) est calculé dans le moule, le procédé de calcul comprenant les étapes suivantes, à savoir que

   - pour chaque angle d'entrée défini $\alpha$ d'un rayon lumineux incident (4), on détecte un maximum d'intensité relatif respectif du rayon lumineux réfléchi (5) ainsi que sa position à l'intérieur de la hauteur de reproduction H sur le capteur optique (6),
   - après détection séquentielle des maxima d'intensité relatifs pour différents angles d'incidence $\alpha$, on détermine pour chaque plus petite unité de détection (7) du capteur optique (6), parmi éventuellement tous les maxima d'intensité relatifs qui y sont détectés, le maximum d'intensité absolu qui y est détecté avec la plus grande intensité de rayonnement d'un rayon lumineux réfléchi (5) avec l'angle d'entrée $\alpha$ correspondant,
   - on détermine pour chaque plus petite unité de détection (7) du capteur optique (6) pour le maximum d'intensité absolu et l'angle d'entrée $\alpha$ correspondant l'angle de sortie $\beta$ correspondant,
   - à l'aide de la plus petite unité de détection (7) pour les maxima d'intensité absolus respectifs et les angles d'entrée $\alpha$ et de sortie $\beta$ associés, on détermine la bissectrice W entre le faisceau lumineux incident (4) et le faisceau lumineux réfléchi (5) et, à l'aide de la normale à la bissectrice W, l'angle d'inclinaison $\gamma$ du contour du bord de la pièce (2) dans l'extension associée à la plus petite unité de détection (7) respective sur le bord de la pièce (2),
   - à l'aide de l'angle du contour du bord de la pièce à usiner par rapport à la première direction principale, associé à chaque plus petite unité de détection (7), le contour est calculé sur toute la hauteur du bord.

9. Procédé selon l'une des revendications précédentes, **caractérisé en ce qu'**avant et/ou entre le calcul du contour de l'arête de la pièce (2), on effectue les étapes suivantes pour le calibrage, à savoir que

   - on détecte l'angle $\delta$ entre la direction de détection Y du capteur optique (6) et au moins une source lumineuse (3),
   - l'au moins un capteur optique (6), l'au moins une source lumineuse (3) et la pièce à usiner (1) avec le bord de pièce à usiner (2) à mesurer sont orientés l'un par rapport à l'autre en conservant l'angle $\delta$ détecté lors de la première étape pour le calibrage de la première direction principale X de telle sorte qu'un maximum d'intensité surfacique est formé sur le capteur optique (6) par les rayons lumineux (5) réfléchis par la surface de la pièce à usiner orientée dans l'étendue de la première direction principale X,
   - l'au moins un capteur optique (6) est calibré de telle sorte que la hauteur de bord h est définie sur la hauteur de représentation H.

10. Procédé selon l'une des revendications précédentes, **caractérisé en ce qu'**une pièce à usiner (1) avec deux bords de pièce à usiner (2) opposés, comme par exemple une lame, est mesurée de telle sorte qu'un procédé selon les revendications précédentes est exécuté en image miroir simultanément ou de manière décalée dans le temps sur une pluralité des côtés pertinents de la pièce à usiner (1).

Fig. 1a

Fig. 1b

Fig. 2

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1577341
- DE 2700713
- EP 3309508 A1
- US 4939379 A
- US 4226536 A
- US 3909131 A
- US 5793493 A